# EUROPÄISCHE PATENTANMELDUNG

(11) **EP 4 403 384 A1**
(43) Veröffentlichungstag der Anmeldung: **24.07.2024**
(21) Anmeldenummer: 23152357.2
(22) Anmeldetag: 19.01.2023
(51) Int. Cl.: B60D 1/28, B60D 1/62

(54) **VERMEIDEN EINES UNBEABSICHTIGTEN UNTERBRECHENS DER VERBINDUNG EINES NUTZFAHRZEUGANHÄNGERS ZU EINER EXTERNEN ELEKTRISCHEN ENERGIEVERSORGUNG**

(71) Anmelder: Schmitz Cargobull AG, 48341 Altenberge (DE)
(72) Erfinder: Ott, Mario, 70825 Korntal-Münchingen (DE); Bockhold, Julien, 48153 Münster (DE); Höltgen, Markus, 42781 Haan (DE); Demmich, Kay, 48161 Münster (DE)
(74) Vertreter: Cohausz & Florack

(57) **Zusammenfassung**

Es wird unter anderem offenbart, ein Verfahren umfassend:
- Erfassen (301) einer Versorgungsverbindungsstatusinformation, die charakteristisch dafür ist, ob ein Nutzfahrzeuganhänger (2) mit einer externen elektrischen Energieversorgung verbunden ist;
- Bestimmen (304) zumindest basierend auf der Versorgungsverbindungsstatusinformation, ob eine Weiterfahrvermeidungsbetriebsfunktion aktiviert werden soll;
- wenn bestimmt wird, dass die Weiterfahrvermeidungsbetriebsfunktion aktiviert werden soll, Aktivieren (306) der Weiterfahrvermeidungsbetriebsfunktion.

## Beschreibung

### Gebiet

Beispielhafte Ausführungsformen der Erfindung betreffen Lösungen, die es ermöglichen ein unbeabsichtigtes Unterbrechen der Verbindung eines Nutzfahrzeuganhängers zu einer externen elektrischen Energieversorgung zu vermeiden.

### Hintergrund

Im Stand der Technik sind Nutzfahrzeuganhänger bekannt, die eine Verbindung mit einer externen elektrischen Energieversorgung herstellen können, damit die externe elektrische Energieversorgung elektrische Energie zur Versorgung des Nutzfahrzeuganhängers und/oder einer oder mehrerer elektrischer Komponenten des Nutzfahrzeuganhängers wie einer Transportkältemaschine und/oder einer Batterie zur Verfügung stellen kann. Zu diesem Zweck weisen die Nutzfahrzeuganhänger beispielsweise elektrische Steckverbindungsmittel wie eine Steckdose auf, die eingerichtet sind, um eine Verbindung (z.B. eine mechanische und elektrische Verbindung) mit korrespondierenden elektrischen Steckverbindungsmitteln herzustellen. Allerdings kann es hierbei zu einem unbeabsichtigten Unterbrechen der Verbindung kommen, die sowohl zu mechanischen Beschädigungen (z.B. an den elektrischen Steckverbindungsmitteln) als auch elektrischen Beschädigungen (z.B. an elektrischen Komponenten des Nutzfahrzeuganhängers) führen kann, wenn der Nutzfahrzeuganhänger weiterfährt, ohne dass die Verbindung zu der externen elektrischen Energieversorgung vorher getrennt wurde.

### Zusammenfassung einiger beispielhafter Ausführungsformen der Erfindung

Eine Aufgabe der Erfindung ist es daher, die oben genannten Nachteile zu überwinden.

Gemäß der Erfindung wird ein Verfahren offenbart, wobei das Verfahren umfasst:
- Erfassen einer Versorgungsverbindungsstatusinformation, die charakteristisch dafür ist, ob der Nutzfahrzeuganhänger mit einer externen elektrischen Energieversorgung verbunden ist;
- Bestimmen zumindest basierend auf der Versorgungsverbindungsstatusinformation, ob eine Weiterfahrvermeidungsbetriebsfunktion aktiviert werden soll;
- wenn bestimmt wird, dass die Weiterfahrvermeidungsbetriebsfunktion aktiviert werden soll, Aktivieren der Weiterfahrvermeidungsbetriebsfunktion.

Das offenbarte Verfahren wird beispielsweise durch eine Vorrichtung ausgeführt.

Dementsprechend wird gemäß der Erfindung ferner eine Vorrichtung offenbart, wobei die Vorrichtung Mittel eingerichtet zur Ausführung des offenbarten Verfahrens umfasst. Die offenbarte Vorrichtung ist beispielsweise ein Nutzfahrzeuganhänger oder ein Teil des Nutzfahrzeuganhängers.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen. Es versteht sich, dass die offenbarte Vorrichtung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor eine Vorrichtung (z.B. die oben offenbarte Vorrichtung) zu veranlassen, das Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Eigenschaften des offenbarten Verfahrens (im Folgenden auch als "Verfahren" bezeichnet), der offenbarten Vorrichtung (im Folgenden auch als "Vorrichtung" bezeichnet) sowie des offenbarten Computerprogramms (im Folgenden auch als "Computerprogramm" bezeichnet) - teilweise beispielhaft - beschrieben. Es versteht sich, dass das Verfahren, die Vorrichtung und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Unter einem Nutzfahrzeuganhänger soll insbesondere ein Nutzfahrzeuganhänger für ein Straßenfahrzeug wie ein Starrdeichselanhänger oder ein Gelenkdeichselanhänger oder ein Sattelauflieger verstanden werden. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Der Nutzfahrzeuganhänger ist beispielsweise eingerichtet, mit einem Zugfahrzeug gekoppelt zu werden, um ein Zuggespann mit dem Zugfahrzeug zu bilden. Zu diesem Zweck können der Nutzfahrzeuganhänger und das Zugfahrzeug beispielsweise jeweils zueinander korrespondierende Kopplungsmittel umfassen, die eingerichtet sind, um eine Verbindung (z.B. eine mechanische und/oder elektrische Verbindung) zwischen dem Nutzfahrzeuganhänger und dem Zugfahrzeug herzustellen. Zum Beispiel umfassen die zueinander korrespondierenden Verbindungsmittel korrespondierende Teile eines Kupplungssystems wie einer Sattelkupplung, einer Bolzenkupplung oder einer Kugelkopfkupplung. Wenn das Zugfahrzeug mit dem Nutzfahrzeuganhänger (z.B. durch die oben offenbarten zueinander korrespondierenden Verbindungsmittel) verbunden ist, bilden das jeweilige Zugfahrzeug und der jeweilige Nutzfahrzeuganänger beispielsweise ein Zuggespann (z.B. einen Lastzug und/oder einen Sattelzug), so dass das jeweilige Zugfahrzeug den jeweiligen Anhänger zieht.

Ferner ist der Nutzfahrzeuganhänger beispielsweise eingerichtet, mit einer externen elektrischen Energieversorgung verbunden zu werden, damit die externe elektrische Energieversorgung elektrische Energie zur Versorgung des Nutzfahrzeuganhängers und/oder einer oder mehrerer elektrischer Komponenten des Nutzfahrzeuganhängers wie einer Transportkältemaschine und/oder einer Batterie zur Verfügung stellen kann. Die externe elektrische Energieversorgung ist kein Teil des Nutzfahrzeuganhängers. Ferner kann die externe elektrische Energieversorgung ortsfest sein. Vorzugsweise ist die externe elektrische Energieversorgung ein elektrisches Energieversorgungsnetz und/oder ein (z.B. ortsfester) Teil eines elektrischen Energieversorgungsnetzes (z.B. in Form einer Ladestation und/oder einer Steckdose).

Um eine Verbindung mit der externen elektrischen Energieversorgung herstellen zu können, umfasst der Nutzfahrzeuganhänger beispielsweise elektrische Steckverbindungsmittel, die eingerichtet sind, um eine Verbindung (z.B. eine mechanische und elektrische Verbindung) mit korrespondierenden elektrischen Steckverbindungsmitteln herzustellen. Zum Beispiel können die zu den Steckverbindungsmitteln des Nutzfahrzeuganhängers korrespondierende Steckverbindungsmittel Teil eines Kabels sein, das mit der externen elektrischen Energieversorgung (z.B. in Form einer Ladestation und/oder einer Steckdose eines elektrischen Energieversorgungsnetzes) verbunden ist, so dass, wenn die elektrischen Steckverbindungsmittel des Nutzfahrzeuganhängers und des Kabels mit einander verbunden sind, der Nutzfahrzeuganhänger mit der externen elektrischen Energieversorgung verbunden ist. Beispiele für solche Steckverbindungsmittel sind blaue oder rote Steckverbinder nach IEC 60309 oder Steckverbinder nach IEC 62196, insbesondere EN 62196 Typ 2 Steckverbinder.

Unter einer Information, die charakteristisch dafür ist, ob ein Zustand (z.B. ein bestimmter und/oder vorbestimmter und/oder definierter und/oder vordefinierter Zustand) vorliegt, soll beispielsweise eine Information verstanden werden, die (1) angibt, ob der Zustand vorliegt (z.B. wenn durch einen Sensor erfasst wird/wurde, dass der Zustand vorliegt), und/oder (2) mit hoher Wahrscheinlichkeit darauf hindeutet, ob der Zustand vorliegt.

Ferner soll unter dem Erfassen einer Information beispielsweise verstanden werden, dass die Information (1) durch einen Sensor, der Teil der Vorrichtung sein kann, die das Verfahren ausführt, erfasst wird und/oder (2) von einem Sensor, der die Information erfasst hat, erhalten wird.

Zum Beispiel kann der Nutzfahrzeuganhänger einen Steckverbindungssensor umfassen, wobei der Steckverbindungssensor eingerichtet ist zu erfassen, ob die elektrischen Steckverbindungsmittel des Nutzfahrzeuganhängers mit korrespondierenden elektrischen Steckverbindungsmitteln verbunden sind. In diesem Beispiel wird die Versorgungsverbindungsstatusinformation durch den Steckverbindungssensor erfasst und/oder von dem Steckverbindungssensor erhalten und deutet zumindest mit hoher Wahrscheinlichkeit daraufhin, ob der Nutzfahrzeuganhänger mit einer externen elektrischen Energieversorgung verbunden ist. Der Steckverbindungssensor ist beispielsweise Teil der elektrischen Steckverbindungsmittel des Nutzfahrzeuganhängers.

Alternativ oder zusätzlich kann auch vorgesehen sein, dass eine elektrische Komponente des Nutzfahrzeuganhängers eingerichtet ist (1) zu erfassen, ob sie durch die externe elektrische Energieversorgung mit Energie versorgt wird, und/oder (2) eine Verbindung zum Neutralleiter der externen elektrischen Energieversorgung zu erkennen. In diesem Beispiel wird die Versorgungsverbindungsstatusinformation durch die elektrische Komponente erfasst und/oder von der elektrischen Komponente erhalten und gibt an, ob der Nutzfahrzeuganhänger mit einer externen elektrischen Energieversorgung verbunden ist.

Ferner kann alternativ oder zusätzlich auch vorgesehen sein, dass Benutzereingabemittel wie eine Benutzerschnittstelle (z.B. eine Tastatur und/oder ein berührungsempfindlicher Bildschirm) des Nutzfahrzeuganhängers eingerichtet sind, eine Benutzereingabe zu erfassen, ob der Nutzfahrzeuganhänger mit einer externen elektrischen Energieversorgung verbunden ist. In diesem Beispiel wird die Versorgungsverbindungsstatusinformation durch die Benutzereingabemittel erfasst und/oder von den Benutzereingabemitteln erhalten und gibt an, ob der Nutzfahrzeuganhänger mit einer externen elektrischen Energieversorgung verbunden ist.

Es versteht sich, dass die Erfindung nicht auf diese Beispiele beschränkt ist.

Das Bestimmen zumindest basierend auf der Versorgungsverbindungsstatusinformation, ob eine Weiterfahrvermeidungsbetriebsfunktion aktiviert werden soll, kann beispielsweise anhand vorgegebener Regeln (z.B. einem vorgegebenem Algorithmus) erfolgen. Die Regeln geben beispielsweise vor, unter welchen Voraussetzungen bestimmt wird, dass die Weiterfahrvermeidungsbetriebsfunktion aktiviert werden soll.

Zum Beispiel ist eine Voraussetzung dafür, dass bestimmt wird, dass die Weiterfahrvermeidungsbetriebsfunktion aktiviert werden soll, dass die Versorgungsverbindungsstatusinformation charakteristisch dafür ist (z.B. angibt oder mit hoher Wahrscheinlichkeit darauf hindeutet), dass der Nutzfahrzeuganhänger mit einer externen elektrischen Energieversorgung verbunden ist.

Dass das Bestimmen zumindest basierend auf der Versorgungsverbindungsstätusinformation erfolgt, soll derart verstanden werden, dass zumindest diese Information beim Bestimmen berücksichtigt wird. Dies schließt jedoch nicht aus, dass noch weitere Informationen beim Bestimmen berücksichtigt werden können.

Wenn bestimmt wird, dass die Weiterfahrvermeidungsbetriebsfunktion aktiviert werden soll, wird die Weiterfahrvermeidungsbetriebsfunktion aktiviert (wenn sie nicht bereits aktiviert ist). Dabei kann es sich beispielsweise um eine Betriebsfunktion des Nutzfahrzeuganhängers und/oder des Zugfahrzeugs handeln. Die Weiterfahrvermeidungsbetriebsfunktion ist beispielsweise eingerichtet, ein unbeabsichtigtes Weiterfahren des Nutzfahrzeuganhängers zu vermeiden, indem sie beispielsweise das Weiterfahren verhindert und/oder versucht die Aufmerksamkeit des Fahrers des Zugfahrzeugs zu erregen, falls der Nutzfahrzeuganhänger in Bewegung gesetzt wird.

Dies ist insbesondere dann vorteilhaft, wenn die Weiterfahrvermeidungsbetriebsfunktion aktiviert ist, solange der Nutzfahrzeuganhänger mit der externen elektrischen Energieversorgung verbunden ist, um ein unbeabsichtigtes Unterbrechen der Verbindung zu vermeiden, die sowohl zu mechanischen Beschädigungen (z.B. an den elektrischen Steckverbindungsmitteln) als auch elektrischen Beschädigungen (z.B. an elektrischen Komponenten des Nutzfahrzeuganhängers) führen kann.

Die Erfindung stellt somit eine Lösung bereit, die es ermöglicht ein unbeabsichtigtes Unterbrechen der Verbindung des Nutzfahrzeuganhängers zur externen elektrischen Energieversorgung zu vermeiden.

Weitere Vorteile der offenbarten Erfindung werden nachfolgend anhand beispielhafter Ausführungsformen des offenbarten Verfahrens, des offenbarten Computerprogramms und der offenbarten Vorrichtung beschrieben.

In beispielhaften Ausführungsformen umfasst das Verfahren ferner:
- Erfassen einer Koppelstatusinformation, die charakteristisch dafür ist, ob der Nutzfahrzeuganhänger mit einem Zugfahrzeug gekoppelt ist, wobei das Bestimmen, ob die Weiterfahrvermeidungsbetriebsfunktion aktiviert werden soll, ferner zumindest auf der Koppelstatusinformation basiert.

Zum Beispiel ist eine Voraussetzung dafür, dass bestimmt wird, dass die Weiterfahrvermeidungsbetriebsfunktion aktiviert werden soll, dass die Koppelstatusinformation charakteristisch dafür ist (z.B. angibt oder mit hoher Wahrscheinlichkeit darauf hindeutet), dass der Nutzfahrzeuganhänger mit einem Zugfahrzeug gekoppelt ist.

Der Nutzfahrzeuganhänger kann beispielsweise einen Kopplungssensor umfassen, wobei der Kopplungssensor eingerichtet ist zu erfassen, ob Kopplungsmittel des Nutzfahrzeuganhängers mit Kopplungsmitteln des Zugfahrzeugs gekoppelt sind. In diesem Beispiel wird die Koppelstatusinformation durch den Kopplungssensor erfasst und/oder von dem Kopplungssensor erhalten und gibt an, ob der Nutzfahrzeuganhänger mit dem Zugfahrzeug gekoppelt ist. Der Kopplungssensor ist beispielsweise Teil der Kopplungsmittel des Nutzfahrzeuganhängers.

In beispielhaften Ausführungsformen umfasst das Verfahren ferner:
- Erfassen einer Bewegungsinformation, die charakteristisch dafür ist, ob sich der Nutzfahrzeuganhänger in Bewegung befindet, wobei das Bestimmen, ob die Weiterfahrvermeidungsbetriebsfunktion aktiviert werden soll, ferner zumindest auf der Bewegungsinformation basiert.

Zum Beispiel ist eine Voraussetzung dafür, dass bestimmt wird, dass die Weiterfahrvermeidungsbetriebsfunktion aktiviert werden soll, dass die Bewegungsinformation charakteristisch dafür ist (z.B. angibt oder mit hoher Wahrscheinlichkeit darauf hindeutet), dass sich der Nutzfahrzeuganhänger nicht in Bewegung befindet.

Der Nutzfahrzeuganhänger kann beispielsweise einen Bewegungssensor umfassen, wobei der Bewegungssensor eingerichtet ist zu erfassen, ob ein Rad des Nutzfahrzeuganhängers rotiert. In diesem Beispiel wird die Bewegungsinformation durch den Bewegungssensor erfasst und/oder von dem Bewegungssensor erhalten und gibt an, ob das Rad des Nutzfahrzeuganhängers rotiert. Wenn das Rad des Nutzfahrzeuganhängers rotiert, deutet dies in diesem Beispiel mit hoher Wahrscheinlichkeit daraufhin, dass sich der Nutzfahrzeuganhänger in Bewegung befindet.

Alternativ oder zusätzlich kann der Bewegungssensor zum Beispiel eingerichtet sein zu erfassen, ob der Nutzfahrzeuganhänger beschleunigt oder verzögert wird. In diesem Beispiel wird die Bewegungsinformation ebenfalls durch den Bewegungssensor erfasst und/oder von dem Bewegungssensor erhalten und gibt an, ob der Nutzfahrzeuganhänger beschleunigt oder verzögert wird, d.h. ob der Nutzfahrzeuganhänger sich bewegt.

Es versteht sich, dass die Erfindung nicht auf diese Beispiele beschränkt ist.

In beispielhaften Ausfiihrungsformen umfasst das Verfahren ferner:
- Erfassen einer Beladungs- und/oder Entladungsstatusinformation, die charakteristisch dafür ist, ob kein Beladungsvorgang zur Beladung eines Laderaums des Nutzfahrzeuganhängers und/oder kein Entladungsvorgang zur Entladung des Laderaums des Nutzfahrzeuganhängers stattfindet, wobei das Bestimmen, ob die Weiterfahrvermeidungsbetriebsfunktion aktiviert werden soll, ferner zumindest auf der Beladungsstatusinformation basiert.

Zum Beispiel ist eine Voraussetzung dafür, dass bestimmt wird, dass die Weiterfahrvermeidungsbetriebsfunktion aktiviert werden soll, dass die Beladungs- und/oder Entladungsstatusinformation charakteristisch dafür ist (z.B. angibt oder mit hoher Wahrscheinlichkeit darauf hindeutet), dass kein Beladungsvorgang zur Beladung des Laderaums des Nutzfahrzeuganhängers und/oder kein Entladungsvorgang zur Entladung des Laderaums des Nutzfahrzeuganhängers stattfindet. Dadurch wird ein Aktivieren der Weiterfahrvermeidungsfunktion verhindert, während ein Beladungs- und/oder Entladungsvorgang stattfindet. Dies ist insbesondere dann vorteilhaft, wenn die Weiterfahrvermeidungsbetriebsfunktion eine Bremsfunktion des Nutzfahrzeuganhängers umfasst. Denn wenn die Bremsen des Nutzfahrzeuganhängers während eines Beladungs- und/oder Entladungsvorgangs aktiviert (z.B. angezogen) sind, kann dies zum Aufbau von mechanischen Spannungen führen, die sich beim Lösen der Bremsen des Nutzfahrzeuganhängers plötzlich in Form von unkontrollierten Bewegungen des Nutzfahrzeuganhängers abbauen können. Da es jedoch unwahrscheinlich ist, dass der Nutzfahrzeuganhänger weiterfährt, während ein Beladungs- und/oder Entladungsvorgang stattfindet, reicht es zur Vermeidung eines unbeabsichtigten Unterbrechens der Verbindung zur externen elektrischen Energieversorgung aus, die Weiterfahrvermeidungsbetriebsfunktion zu aktivieren, wenn kein Beladungsvorgang zur Beladung des Laderaums des Nutzfahrzeuganhängers und kein Entladungsvorgang zur Entladung des Laderaums des Nutzfahrzeuganhängers (mehr) stattfindet.

Im Folgenden wird die Beladungs- und/oder Entladungsstatusinformation anhand einiger Beispiele erläutert. Es versteht sich jedoch, dass die Erfindung nicht auf diese Beispiele beschränkt ist.

Zum Beispiel umfasst die Beladungs- und/oder Entladungsstatusinformation eine Ladetürstatusinformation, die charakteristisch dafür ist, ob eine Ladetür des Nutzfahrzeuganhängers geöffnet und/oder geschlossen ist. Der Nutzfahrzeuganhänger kann beispielsweise einen Ladetürsensor umfassen, der eingerichtet ist zu erfassen, ob eine Ladetür des Nutzfahrzeuganhängers geöffnet und/oder geschlossen ist. In diesem Beispiel wird die Beladungs- und/oder Entladungsstatusinformation zumindest teilweise durch den Ladetürsensor erfasst und/oder von dem Ladetürsensor erhalten und gibt an, ob die Ladetür des Nutzfahrzeuganhängers geöffnet und/oder geschlossen ist. Wenn die Ladetür des Nutzfahrzeuganhängers geschlossen ist, deutet dies beispielsweise mit hoher Wahrscheinlichkeit daraufhin, dass kein Beladungsvorgang zur Beladung des Laderaums des Nutzfahrzeuganhängers und kein Entladungsvorgang zur Entladung des Laderaums des Nutzfahrzeuganhängers stattfinden. Dies gilt insbesondere dann, wenn der Nutzfahrzeuganhänger einen Kofferaufbau aufweist.

Alternativ oder zusätzlich kann die Beladungs- und/oder Entladungsstatusinformation eine Laderaumbewegungsinformation, die charakteristisch für Bewegung im Laderaum des Nutzfahrzeuganhängers ist, umfassen. Der Nutzfahrzeuganhänger kann beispielsweise einen Laderaumbewegungssensor umfassen, der eingerichtet ist, Bewegung im Laderaum zu erfassen. In diesem Beispiel wird die Beladungs- und/oder Entladungsstatusinformation zumindest teilweise durch den Laderaumbewegungssensor erfasst und/oder von dem Laderaumbewegungssensor erhalten und gibt an, ob (und gegebenenfalls wann) Bewegung im Laderaum erfasst wurde. Wenn keine Bewegung im Laderaum erfasst wurde (z.B. in einem vorgegebenen Zeitraum), deutet dies beispielsweise mit hoher Wahrscheinlichkeit daraufhin, dass kein Beladungsvorgang zur Beladung des Laderaums des Nutzfahrzeuganhängers und kein Entladungsvorgang zur Entladung des Laderaums des Nutzfahrzeuganhängers stattfinden.

Ferner kann die Beladungs- und/oder Entladungsstatusinformation alternativ oder zusätzlich eine Beladungsgewichtsinformation, die charakteristisch für ein Gewicht der Beladung des Nutzfahrzeuganhängers und/oder eine Veränderung des Gewichts der Beladung des Nutzfahrzeuganhängers ist, umfassen. Der Nutzfahrzeuganhänger kann beispielsweise einen Beladungsgewichtssensor umfassen, der eingerichtet ist, das Gewicht und/oder eine Veränderung des Gewichts der Beladung des Nutzfahrzeuganhängers zu erfassen, umfassen. In diesem Beispiel wird die Beladungs- und/oder Entladungsstatusinformation zumindest teilweise durch den Beladungsgewichtssensor erfasst und/oder von dem Beladungsgewichtssensor erhalten. Sie gibt beispielsweise das Gewicht der Beladung an; und/oder sie gibt an, ob (und gegebenenfalls wann) eine Veränderung des Gewichts der Beladung des Nutzfahrzeuganhängers erfasst wurde. Wenn keine Veränderung des Gewichts erfasst wurde (z.B. in einem vorgegebenen Zeitraum), deutet dies beispielsweise mit hoher Wahrscheinlichkeit daraufhin, dass kein Beladungsvorgang zur Beladung des Laderaums des Nutzfahrzeuganhängers und kein Entladungsvorgang zur Entladung des Laderaums des Nutzfahrzeuganhängers stattfinden.

In beispielhaften Ausführungsformen umfasst das Verfahren ferner:
- Erfassen einer Benutzerwunschinformation, die charakteristisch dafür ist, ob ein Benutzer ein Aktivieren der Weiterfahrvermeidungsbetriebsfunktion wünscht, wobei das Bestimmen, ob die Weiterfahrvermeidungsbetriebsfunktion aktiviert werden soll, ferner zumindest auf der Benutzerwunschinformation basiert.

Zum Beispiel ist eine Voraussetzung dafür, dass bestimmt wird, dass die Weiterfahrvermeidungsbetriebsfunktion aktiviert werden soll, dass die Benutzerwunschinformation charakteristisch dafür ist (z.B. angibt oder mit hoher Wahrscheinlichkeit darauf hindeutet), ob ein Benutzer ein Aktivieren der Weiterfahrvermeidungsbetriebsfunktion wünscht.

Zum Beispiel wird die Benutzerwunschinformation in Form einer Benutzereingabe erfasst. Zu diesem Zweck kann der Nutzfahrzeuganhänger beispielsweise Benutzereingabemittel wie eine Tastatur und/oder einen berührungsempfindlichen Bildschirm umfassen, die eingerichtet sind zu erfassen, ob der Benutzer ein Aktivieren der Weiterfahrvermeidungsbetriebsfunktion wünscht. Die Benutzerwunschinformation gibt dementsprechend in diesem Beispiel an, ob der Benutzer ein Aktivieren der Weiterfahrvermeidungsbetriebsfunktion wünscht.

In beispielhaften Ausführungsformen umfasst die Weiterfahrvermeidungsbetriebsfunktion:
- eine Bremsfunktion; und/oder
- eine Warnfunktion.

Sowohl bei der Bremsfunktion als auch bei der Warnfunktion kann es sich jeweils um eine Betriebsfunktion des Nutzfahrzeuganhängers und/oder des Zugfahrzeugs handeln.

Zum Beispiel bewirkt die Bremsfunktion ein (z.B. dauerhaftes) Blockieren von Rädern des Nutzfahrzeuganhängers und/oder des Zugfahrzeugs, solange die Weiterfahrvermeidungsbetriebsfunktion aktiviert ist. Zu diesem Zweck (1) umfasst die Bremsfunktion beispielsweise die Feststellbremse und/oder die Betriebsbremse des Nutzfahrzeuganhängers und/oder des Zugahrzeugs und/oder (2) steuert die Feststellbremse und/oder die Betriebsbremse des Nutzfahrzeuganhängers und/oder des Zugfahrzeugs. Durch das Blockieren der Räder werden ein unbeabsichtigtes Weiterfahren des Nutzfahrzeuganhängers und damit ein unbeabsichtigtes Unterbrechen der Verbindung zur externen elektrischen Energieversorgung verhindert.

Alternativ oder zusätzlich kann die Bremsfunktion ein Abbremsen von Rädern des Nutzfahrzeuganhängers und/oder des Zugfahrzeugs bewirken, wenn der Nutzfahrzeuganhänger gezogen (z.B. durch das Zugfahrzeug) und/oder bewegt wird, während die Weiterfahrvermeidungsbetriebsfunktion aktiviert ist. Zum Beispiel können die Räder des Nutzfahrzeuganhängers und/oder des Zugfahrzeugs einmalig oder mehrmalig abgebremst werden (z.B. in Form einer Teillastbremsung und/oder Stotterbremsung), wenn der Nutzfahrzeuganhänger (z.B. durch das Zugfahrzeug) gezogen und/oder bewegt wird, während die Weiterfahrvermeidungsbetriebsfunktion aktiviert ist. Zu diesem Zweck (1) umfasst die Bremsfunktion beispielsweise die Betriebsbremse des Nutzfahrzeuganhängers und/oder des Zugfahrzeugs und/oder (2) steuert die Betriebsbremse des Nutzfahrzeuganhängers und/oder des Zugfahrzeugs. Durch das Abbremsen soll die Aufmerksamkeit des Fahrers des Zugfahrzeugs erregt werden, um ein unbeabsichtigtes Weiterfahren des Nutzfahrzeuganhängers und damit ein unbeabsichtigtes Unterbrechen der Verbindung zur externen elektrischen Energieversorgung zu vermeiden.

Die Warnfunktion kann bewirken, dass eine Warnung auf einem Bildschirm des Nutzfahrzeuganhängers und/oder des Zugfahrzeugs angezeigt wird, solange die Weiterfahrvermeidungsbetriebsfunktion aktiviert ist. Zu diesem Zweck (1) umfasst die Warnfunktion beispielsweise den Bildschirm des Nutzfahrzeuganhängers und/oder des Zugfahrzeugs und/oder (2) steuert den Bildschirm des Nutzfahrzeuganhängers und/oder des Zugfahrzeugs. Durch das Anzeigen der Warnung soll die Aufmerksamkeit des Fahrers erregt werden, um ein unbeabsichtigtes Weiterfahren des Nutzfahrzeuganhängers und damit ein unbeabsichtigtes Unterbrechen der Verbindung zur externen elektrischen Energieversorgung zu vermeiden.

Die Warnfunktion kann alternativ oder zusätzlich ein Warnsignal des Nutzfahrzeuganhängers und/oder des Zugfahrzeugs aktivieren, wenn der Nutzfahrzeuganhänger (z.B. durch das Zugfahrzeug) gezogen und/oder bewegt wird, während die Weiterfahrvermeidungsbetriebsfunktion aktiviert ist. Bei dem Warnsignal kann es sich beispielsweise um ein optisches und/oder akustisches Warnsignal handeln. Durch das Warnsignal soll ähnlich wie durch das Abbremsen die Aufmerksamkeit des Fahrers erregt werden, um ein unbeabsichtigtes Weiterfahren des Nutzfahrzeuganhängers und damit ein unbeabsichtigtes Unterbrechen der Verbindung zur externen elektrischen Energieversorgung zu vermeiden.

In beispielhaften Ausführungsformen umfasst das Verfahren ferner:
- Bestimmen, ob die Weiterfahrvermeidungsbetriebsfunktion deaktiviert werden soll;
- wenn bestimmt wird, dass die Weiterfahrvermeidungsbetriebsfunktion deaktiviert werden soll, Deaktivieren der Weiterfahrvermeidungsbetriebsfunktion.

Das Bestimmen kann beispielsweise anhand vorgegebener Regeln (z.B. einem vorgegebenem Algorithmus) erfolgen. Die Regeln geben beispielsweise vor, unter welchen Voraussetzungen bestimmt wird, dass die Weiterfahrvermeidungsbetriebsfunktion deaktiviert werden soll.

Zum Beispiel kann vorgegeben sein, dass, wenn zumindest eine Voraussetzung dafür, dass bestimmt wird, dass die Weiterfahrvermeidungsbetriebsfunktion aktiviert werden soll, nicht mehr gegeben ist, die Weiterfahrvermeidungsbetriebsfunktion deaktiviert werden soll. In diesem Zusammenhang soll unter einer weiteren Information beispielsweise eine Information verstanden werden, die (zeitlich) nach einer Information erfasst wird, basierend auf der bestimmt wurde, dass die Weiterfahrvermeidungsbetriebsfunktion aktiviert werden soll, so dass die weitere Information einen Rückschluss darauf zulässt, ob die Voraussetzungen dafür, dass bestimmt wird, dass die Weiterfahrvermeidungsbetriebsfunktion aktiviert werden soll, nicht mehr gegeben sind.

Zum Beispiel kann das Bestimmen, ob die Weiterfahrvermeidungsbetriebsfunktion deaktiviert werden soll, zumindest auf einer oder mehrerer der folgenden Informationen basieren:
- einer weiteren Versorgungsverbindungsstatusinformation; und/oder
- einer weiteren Koppelstatusinformation; und/oder
- einer weiteren Bewegungsinformation; und/oder
- einer weiteren Beladungs- und/oder Entladungsstatusinformation; und/oder
- einer weiteren Benutzerwunschinformation.

Wenn bestimmt wird,'dass die Weiterfahrvermeidungsbetriebsfunktion deaktiviert werden soll, wird die Weiterfahrvermeidungsbetriebsfunktion deaktiviert (wenn sie nicht bereits deaktiviert ist).

In beispielhaften Ausführungsformen umfasst der Nutzfahrzeuganhänger einen Steckverbinder zur Herstellung einer Verbindung mit der externen elektrischen Energieversorgung. Bei dem Steckverbinder kann es sich um die oben offenbarten Steckverbindungsmittel handeln.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform einer Vorrichtung gemäß der Erfindung;
- Fig. 2: eine schematische Darstellung einer beispielhaften Ausführungsform eines Nutzfahrzeugs gemäß der Erfindung; und
- Fig. 3: ein Flussdiagramm einer Ausführungsform eines Verfahrens gemäß der Erfindung

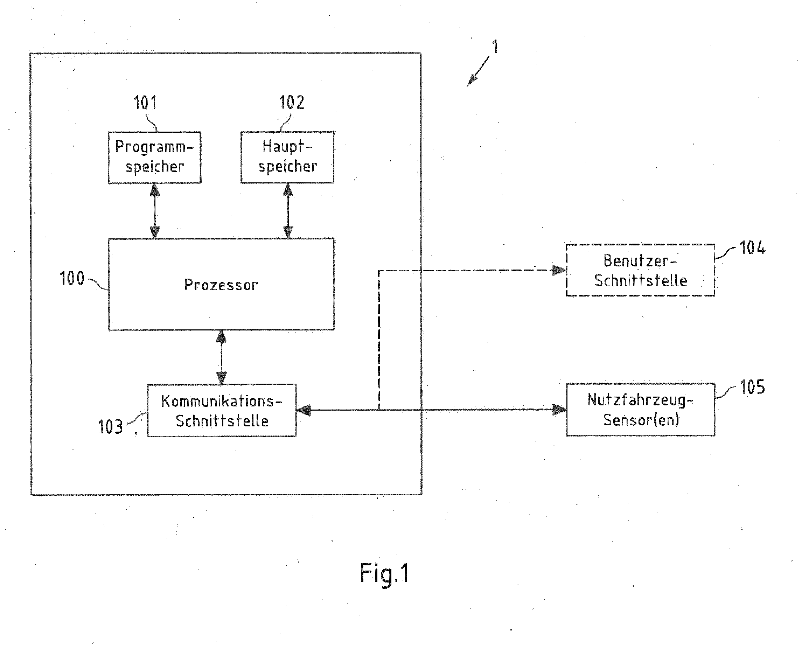

Fig. 1 zeigt eine schematische Darstellung einer Ausführungsform einer Vorrichtung 1 gemäß der Erfindung. Im Folgenden wird davon ausgegangen, dass die Vorrichtung 1 Teil eines Nutzfahrzeuganhängers ist. Zum Beispiel kann die Vorrichtung 1 Teil einer Transportkältemaschine des Nutzfahrzeuganhängers sein, zum Beispiel als Steuervorrichtung und/oder Telematikeinheit der Transportkältemaschine. In einer anderen Ausführungsform kann die Vorrichtung 1 auch der Nutzfahrzeuganhänger sein.

Die Vorrichtung 1 umfasst einen Prozessor 100 und verbunden mit dem Prozessor 100 einen ersten Speicher als Programmspeicher 101, einen zweiten Speicher als Hauptspeicher 102 und eine Kommunikationsschnittstelle 103.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Vorrichtung 1 auch mehrere Prozessoren 100 umfassen kann.

Der Prozessor 100 führt Programmanweisungen aus, die in Programmspeicher 101 gespeichert sind, und speichert beispielsweise Zwischenergebnisse oder Ähnliches in Hauptspeicher 102.

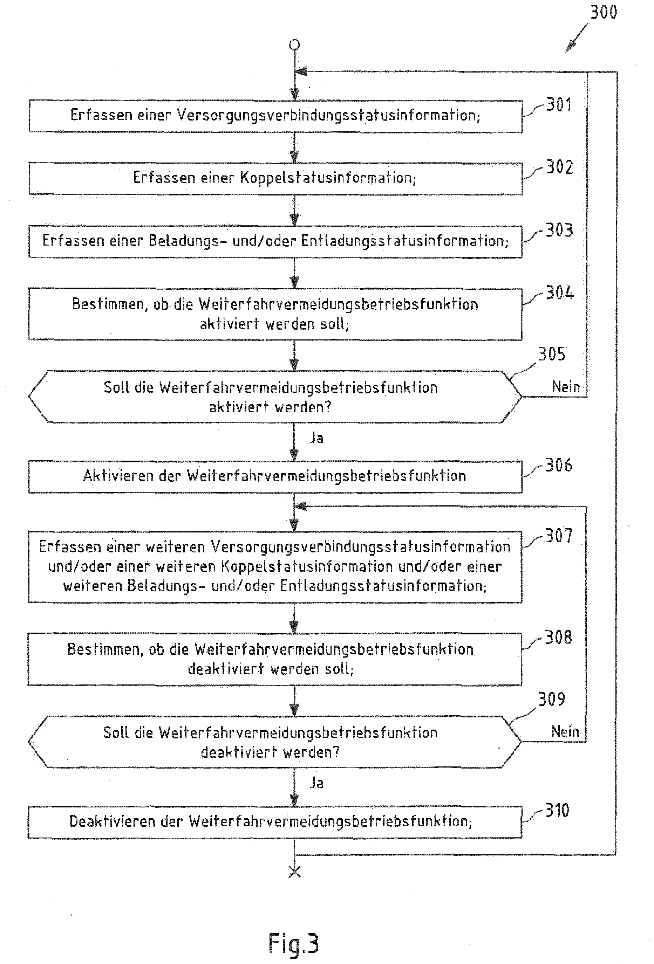

In dem Programmspeicher 101 sind beispielsweise Programmanweisungen gespeichert, die den Prozessor 100, wenn er die Programmanweisungen ausführt, veranlassen, das Verfahren gemäß der Erfindung (z.B. das Verfahren gemäß dem in Fig. 3 oder 4 dargestellten Flussdiagrammen 2 oder 3) zumindest teilweise auszuführen und/oder zu steuern.

Der Programmspeicher 101 enthält ferner beispielsweise das Betriebssystem der Vorrichtung 1, das beim Starten der Vorrichtung 1 zumindest teilweise in Hauptspeicher 102 geladen und vom Prozessor 100 ausgeführt wird. Insbesondere wird beim Starten der Vorrichtung 1 zumindest ein Teil des Kerns des Betriebssystems in den Hauptspeicher 102 geladen und von Prozessor 100 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 102 und der Programmspeicher 101 können auch als ein Speicher ausgebildet sein. Alternativ können der Hauptspeicher 102 und/oder der Programmspeicher 101 jeweils durch mehrere Speicher gebildet werden. Ferner können der Hauptspeicher 102 und/oder der Programmspeicher 101 auch Teil des Prozessors 100 sein.

Der Prozessor 100 steuert die Kommunikationsschnittstelle 103, welche beispielsweise eingerichtet ist, Informationen mit anderen Komponenten des Nutzfahrzeuganhängers auszutauschen (z.B. zu senden und/oder zu empfangen). Die Kommunikationsschnittstelle 103 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit der optionalen Benutzerschnittstelle 104 und/oder einem oder mehreren Nutzfahrzeugsensoren 105 des Nutzfahrzeuganhängers über ein Ethernet-Netzwerk oder ein CAN-, K-Leitungs-, LIN- oder Flexray-Bussystem des Nutzfahrzeuganhängers. Zum Beispiel kann die Vorrichtung 1 durch die Kommunikationsschnittstelle 103 Informationen an die Benutzerschnittstelle 104 und/oder Nutzfahrzeugsensoren 105 senden und/oder von diesen empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 1 sind die Benutzerschnittstelle und die Nutzfahrzeugsensoren 105 nicht als Teil der Vorrichtung 1 dargestellt. Es versteht sich, jedoch, dass die Benutzerschnittstelle 104 und/oder die Nutzfahrzeugsensoren 105 auch Teil der Vorrichtung 1 sein kann/können, insbesondere dann, wenn die Vorrichtung 1 der Nutzfahrzeuganhänger ist sowie die Benutzerschnittstelle 104 und/oder die Nutzfahrzeugsensoren 105 Teil des Nutzfahrzeuganhängers ist/sind.

Eine Benutzerschnittstelle 104 ist beispielsweise eingerichtet, eine Information in Form einer Benutzereingabe zu erfassen und/oder eine Information an einen Benutzer auszugeben. Zum Beispiel ist die Benutzerschnittstelle 104 eine Tastatur, ein Bildschirm, ein berührungsempfindlicher Bildschirm, ein Lautsprecher, eine Hupe und/oder ein Mikrofon. Die Benutzerschnittstelle 104 ist beispielsweise Teil des Nutzfahrzeuganhängers oder eines mit dem Nutzfahrzeuganhänger gekoppelten Zugfahrzeugs.

Beispiele für die Nutzfahrzeugsensoren 105 sind ein Ladetürsensor 105 und/oder ein Beladungsgewichtssensor 105b und/oder ein Laderaumbewegungssensor 105c und/oder ein 105d und/oder ein Kopplungssensor 105e.

Die Nutzfahrzeugsensoren 105 können zumindest teilweise Teil des Nutzfahrzeuganhängers und/oder Teil eines mit dem Nutzfahrzeuganhänger gekoppelten Zugfahrzeugs sein.

Die Komponenten 100 bis 103 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den dargestellten Komponenten 100 bis 103 weitere Komponenten (z.B. eine Benutzerschnittstelle) umfassen kann.

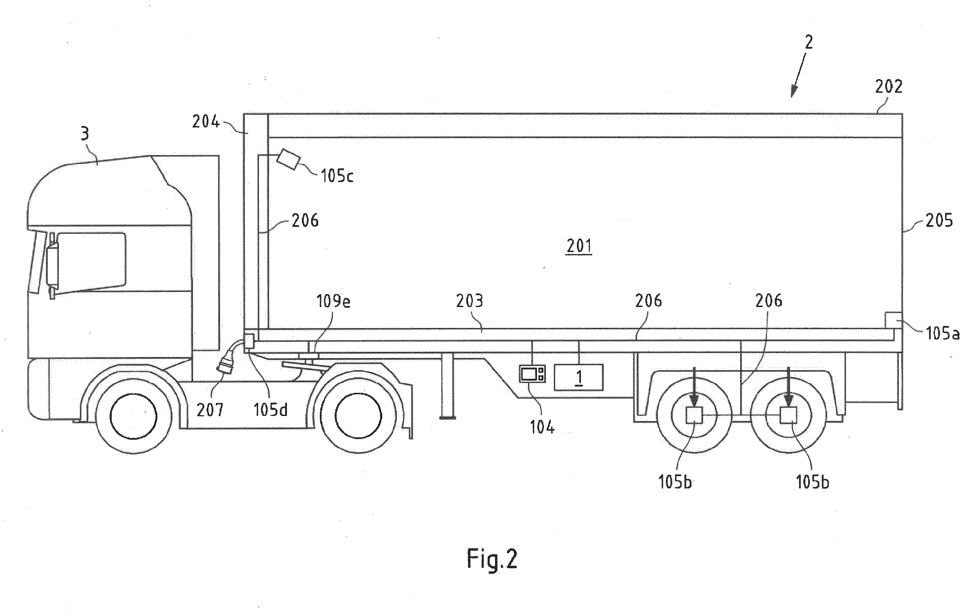

Fig. 2 zeigt eine schematische Darstellung einer beispielhaften Ausführungsform eines Nutzfahrzeuganhängers 2 als Teil eines Zuggespanns mit einem Zugfahrzeug 3 gemäß der Erfindung. Der Nutzfahrzeuganhänger 2 ist ein Sattelauflieger. In dem Sattelauflieger 2 ist eine Vorrichtung 1 angeordnet. Im Folgenden wird beispielhaft davon ausgegangen, dass diese Vorrichtung 1 der in Fig. 1 dargestellten Vorrichtung 1 entspricht.

Im Folgenden wird die beispielhafte Ausführungsform des Sattelaufliegers 2 anhand von Fig. 2 erläutert. Der Sattelauflieger 2 umfasst einen Laderaum 201. Der Laderaum 201 des Sattelaufliegers 2 wird oben durch das Laderaumdach 202 und unten durch den Laderaumboden 203 begrenzt. Ferner wird der Laderaum durch die Stirnwand 204 und Rückwand 205 sowie nicht dargestellte seitliche Begrenzungsflächen (z.B. Seitenplanen begrenzt). Die Rückwand 205 wird durch eine nicht dargestellte Flügeltür gebildet. An der Flügeltür kann ein Ladetürsensor 105a (z.B. ein Türkontaktschalter) angeordnet sein, der eingerichtet ist, um zu erfassen, ob die Flügeltür geöffnet oder geschlossen ist, und eine Ladetürstatusinformation, die angibt, ob erfasst wurde, dass die Flügeltür geöffnet oder geschlossen ist, über die Verbindung 206 an die Vorrichtung 1 zu senden.

Ferner umfasst der Sattelauflieger 2 Beladungsgewichtssensoren 105b (z.B. als Achslastsensoren), die jeweils eingerichtet sind, das auf der jeweiligen Achse des Sattelaufliegers 2 lastende Gewicht (hier beispielhaft symbolisiert durch die Pfeile) zu erfassen und eine Beladungsgewichtsinformation, die charakteristisch für ein erfasstes Gewicht der Beladung des Sattelaufliegers 2 und/oder eine erfasste Veränderung des Gewichts der Beladung des Sattelaufliegers 2 ist, über die Verbindung 206 an die Vorrichtung 1 zu senden.

Außerdem umfasst der Sattelauflieger 2 einen Laderaumbewegungssensor 105c, der eingerichtet ist, Bewegung im Laderaum 201 des Sattelaufliegers 2 zu erfassen, und eine Laderaumbewegungsinformation, die charakteristisch für eine erfasste Bewegung im Laderaum 201 des Sattelaufliegers 2 ist, über die Verbindung 206 an die Vorrichtung 1 zu senden.

Der Sattelauflieger 2 umfasst elektrische Steckverbindungsmittel 407, die eingerichtet sind, um eine Verbindung (z.B. eine mechanische und elektrische Verbindung) mit korrespondierenden elektrischen Steckverbindungsmitteln herzustellen, um mit einer externen elektrischen Energieversorgung verbunden zu werden. Beispiele für solche Steckverbindungsmittel sind blaue oder rote Steckverbinder nach IEC 60309 oder Steckverbinder nach IEC 62196, insbesondere EN 62196 Typ 2 Steckverbinder. Die Steckverbindungsmittel weisen einen Steckverbindungssensor 105d auf, der eingerichtet ist, um zu erfassen, ob die elektrischen Steckverbindungsmittel 407 mit korrespondierenden elektrischen Steckverbindungsmitteln verbunden sind, und eine Versorgungsverbindungsstatusinformation, die angibt, ob erfasst wurde, dass die elektrischen Steckverbindungsmittel 407 mit korrespondierenden elektrischen Steckverbindungsmitteln verbunden sind, über die Verbindung 206 an die Vorrichtung 1 zu senden.

Darüber hinaus umfasst der Sattelauflieger 2 einen Kopplungssensor 105e, wobei der Kopplungssensor 105e eingerichtet ist, um zu erfassen, ob Kopplungsmittel des Sattelaufliegers 2 mit Kopplungsmitteln des Zugfahrzeugs 3 gekoppelt sind, und eine Koppelstatusinformation, die angibt, ob erfasst wurde, dass der Sattelauflieger 2 mit dem Zugfahrzeug 3 gekoppelt ist, über die Verbindung 206 an die Vorrichtung 1 zu senden.

Es versteht sich, dass der Sattelauflieger 2 neben Sensoren 105a bis 105e weitere Sensoren umfassen kann. Auch kann der Sattelauflieger 2 nur einen Teil (z.B. nur ein oder zwei oder drei oder vier) der Sensoren 105a bis 105e umfassen.

Ferner umfasst Sattelauflieger 2 eine Benutzerschnittstelle 104, die in Fig. 2 beispielhaft als berührungsempfmdlicher Bildschirm dargestellt ist. Die Benutzerschnittstelle 104 ist beispielsweise eingerichtet, eine Information in Form einer Benutzereingabe zu erfassen und die erfasste Information über die Verbindung 206 an die Vorrichtung 1 zu senden und/oder eine Information über die Verbindung 206 von der Vorrichtung zu empfangen und die empfangene Information an einen Benutzer auszugeben.

Die Verbindung 206 ist beispielsweise eine drahtgebundene Kommunikationsverbindung eines Ethernet-Netzwerks oder eines CAN-, K-Leitungs-, LIN- oder Flexray Bussystems des Sattelaufliegers 2.

Fig. 3 ist ein Flussdiagramm 300 einer Ausführungsform eines Verfahrens gemäß der Erfindung. Im Folgenden wird beispielhaft davon ausgegangen, dass das Verfahren durch die Vorrichtung 1, die Teil des in Fig. 2 dargestellten Sattelaufliegers 2 ist, ausgeführt wird. Im Folgenden wird ferner beispielhaft davon ausgegangen, dass die Weiterfahrvermeidungsfunktion beim Start des Flussdiagramms deaktiviert ist.

In einem Schritt 301 wird eine Versorgungsverbindungsstatusinformation, die charakteristisch dafür ist, ob ein Nutzfahrzeuganhänger mit einer externen elektrischen Energieversorgung verbunden ist, erfasst. Im vorliegenden Beispiel wird die Versorgungsverbindungsstatusinformation in Schritt 301 durch die Kommunikationsschnittstelle 103 über die Verbindung 206 von dem Steckverbindungssensor 105d empfangen und gibt an, ob der Steckverbindungssensor 105d erfasst hat, dass die elektrischen Steckverbindungsmittel 407 mit korrespondierenden elektrischen Steckverbindungsmitteln verbunden sind.

In einem optionalen Schritt 302 wird eine Koppelstatusinformation, die charakteristisch dafür ist, ob der Nutzfahrzeuganhänger mit einem Zugfahrzeug gekoppelt ist, erfasst. Im vorliegenden Beispiel wird die Koppelstatusinformation in Schritt 302 durch die Kommunikationsschnittstelle 103 über die Verbindung 206 von dem Kopplungssensor 105e empfangen und gibt an, ob der Kopplungssensor 105d erfasst hat, dass der Sattelauflieger 2 mit dem Zugfahrzeug 3 gekoppelt ist.

In einem optionalen Schritt 303 wird eine Beladungs- und/oder Entladungsstatusinformation, die charakteristisch dafür ist, ob kein Beladungsvorgang zur Beladung eines Laderaums des Nutzfahrzeuganhängers und/oder kein Entladungsvorgang zur Entladung des Laderaums des Nutzfahrzeuganhängers stattfindet, erfasst. Zum Beispiel wird die Beladungs- und/oder Entladungsstatusinformation in Schritt 303 in Form einer Ladetürstatusinformation durch die Kommunikationsschnittstelle 103 über die Verbindung 206 von dem Ladetürsensor 105a empfangen und gibt an, ob der Ladetürsensor 105 erfasst hat, dass die Flügeltür geöffnet oder geschlossen ist.

Es versteht sich, dass die Schritte 301 bis 303 auch gleichzeitig in einem Schritt oder in einer beliebigen anderen Reihenfolge stattfinden können.

In einem Schritt 304 wird bestimmt, ob eine Weiterfahrvermeidungsbetriebsfunktion aktiviert werden soll. Das Bestimmen in Schritt 304 basiert zumindest auf der in Schritt 301 erfassten Versorgungsverbindungsstatusinformation. Ferner kann das Bestimmen in Schritt 304 beispielsweise auch auf den in den optionalen Schritten 302 und 303 erfassten Koppelstatusinformation und Ladetürstatusinformation basieren.

Das Bestimmen in Schritt 304 kann beispielsweise anhand vorgegebener Regeln (z.B. einem vorgegebenem Algorithmus) erfolgen. Die Regeln geben beispielsweise vor, unter welchen Voraussetzungen bestimmt wird, dass die Weiterfahrvermeidungsbetriebsfunktion aktiviert werden soll. Zum Beispiel kann vorgegeben sein, dass bestimmt wird, dass die Weiterfahrvermeidungsbetriebsfunktion aktiviert werden soll, wenn:
(1) die in Schritt 301 erfasste Versorgungsverbindungsstatusinformation angibt, dass der Steckverbindungssensor 105d erfasst hat, dass die elektrischen Steckverbindungsmittel 407 mit korrespondierenden elektrischen Steckverbindungsmitteln verbunden sind; und
(2) die in Schritt 302 erfasste Koppelstatusinfonnation angibt, dass der Kopplungssensor 105d erfasst hat, dass der Sattelauflieger 2 mit dem Zugfahrzeug 3 gekoppelt ist; und
(3) die in Schritt 303 erfasste Ladetürstatusinformation angibt, dass der Ladetürsensor 105a erfasst hat, dass die Flügeltür geschlossen ist.

Wenn in Schritt 304 bestimmt wird, dass die Weiterfährvermeidungsbetriebsfunktion aktiviert werden soll, wird die Weiterfahrvermeidungsbetriebsfunktion in Schritt 306 aktiviert. Andernfalls springt das Flussdiagramm in Schritt 305 zu Schritt 301 und beginnt von vorne.

Die Weiterfahrvermeidungsbetriebsfunktion ist beispielsweise eingerichtet, ein unbeabsichtigtes Weiterfahren des Sattelaufliegers 2 zu vermeiden, indem sie beispielsweise das Weiterfahren verhindert und/oder versucht die Aufmerksamkeit des Fahrers des Zugfahrzeugs 3 zu erregen, falls der Sattelauflieger 2 in Bewegung versetzt wird, während die Weiterfahrvermeidungsbetriebsfunktion aktiviert ist.

Zum Beispiel kann in Schritt 306 eine Warnfunktion und/oder eine Bremsfunktion aktiviert werden.

Um die Warnfunktion zu aktivieren, kann beispielsweise die Vorrichtung 1 durch die Kommunikationsschnittstelle 103 über die Verbindung 206 eine Information an die Benutzerschnittstelle 104 senden, die bewirkt, dass die Benutzerschnittstelle 104 eine Warnung an den Benutzer ausgibt, z.B. die Warnung auf dem Bildschirm 104 anzeigt.

Um die Bremsfunktion zu aktivieren, kann die Vorrichtung 1, die Feststellbremse und/oder die Betriebsbremse des Sattelaufliegers 2 und/oder des Zugfahrzeugs 3 derart ansteuern, dass ein (z.B. dauerhaftes) Blockieren von Rädern des Sattelaufliegers 2 und/oder des Zugfahrzeugs 3 bewirkt wird, solange die Weiterfahrvermeidungsbetriebsfunktion aktiviert ist. Alternativ oder zusätzlich kann, um die Bremsfunktion zu aktivieren, die Betriebsbremse derart angesteuert werden, dass ein Abbremsen von Rädern des Sattelaufliegers 2 und/oder des Zugfahrzeugs 3 bewirkt wird, wenn der Sattelauflieger 2 gezogen (z.B. durch das Zugfahrzeug 3) und/oder bewegt wird, während die Weiterfahrvermeidungsbetriebsfunktion aktiviert ist. Zum Beispiel können die Räder des Sattelaufliegers 2 und/oder des Zugfahrzeugs 3 einmalig oder mehrmalig abgebremst werden (z.B. in Form einer Teillastbremsung und/oder Stotterbremsung), wenn der Sattelauflieger 2 (z.B. durch das Zugfahrzeug 3) gezogen und/oder bewegt wird, während die Weiterfahrvenneidungsbetriebsfunktion aktiviert ist. Es kann vorgesehen sein, dass die Bremsfunktion nur dann aktiviert wird, wenn die Benutzerschnittstelle 104 eine Benutzerwunschinformation in Form einer Benutzereingabe erfasst, die angibt, dass der Benutzer ein Aktivieren der Weiterfahrvermeidungsbetriebsfunktion, insbesondere in Form der Bremsfunktion, wünscht.

In einem optionalen Schritt 307 wird eine weitere Versorgungsverbindungsstatusinformation und/oder eine weitere Koppelstatusinformation und/oder eine weitere Beladungs- und/oder Entladungsstatusinformation erfasst. Das Erfassen in Schritt 307 erfolgt zeitlich beispielsweise nach den Schritten 301 bis 306.

Es versteht sich, dass das Erfassen der verschiedenen weiteren Informationen in Schritt 307 auch in mehreren aufeinanderfolgenden Schritten in beliebiger Reihenfolge stattfinden kann.

In einem optionalen Schritt 308 wird bestimmt, ob die Weiterfahrvermeidungsbetriebsfunktion deaktiviert werden soll.

Das Bestimmen in Schritt 308, ob die Weiterfahrvermeidungsbetriebsfunktion deaktiviert werden soll, kann beispielsweise anhand vorgegebener Regeln (z.B. einem vorgegebenem Algorithmus) erfolgen. Die Regeln geben beispielsweise vor, unter welchen Voraussetzungen bestimmt wird, dass die Weiterfahrvermeidungsbetriebsfunktion deaktiviert werden soll. Zum Beispiel kann vorgegeben sein, dass, wenn zumindest eine Voraussetzung dafür, dass in Schritt 304 bestimmt wurde, dass die Weiterfahrvermeidungsbetriebsfunktion aktiviert werden soll, nicht mehr gegeben ist, die Weiterfahrvermeidungsbetriebsfunktion deaktiviert werden soll. In diesem Zusammenhang soll unter einer weiteren Information beispielsweise eine Information verstanden werden, die (zeitlich) nach der Information erfasst wird, basierend auf der in Schritt 304 bestimmt wurde, dass die Weiterfahrvermeidungsbetriebsfunktion aktiviert werden soll, so dass die weitere Information einen Rückschluss darauf zulässt, ob die Voraussetzungen dafür, dass bestimmt wurde, dass die Weiterfahrvermeidungsbetriebsfunktion aktiviert werden soll, nicht mehr gegeben sind.

Das Bestimmen in Schritt 308 erfolgt zumindest basierend auf einer der in Schritt 307 erfassten weiteren Informationen. Zum Beispiel kann vorgegeben sein, dass bestimmt wird, dass die Weiterfahrvermeidungsbetriebsfunktion deaktiviert werden soll, wenn:
(1) die in Schritt 307 erfasste weitere Versorgungsverbindungsstatusinformation angibt, dass der Steckverbindungssensor 105d erfasst hat, dass die elektrischen Steckverbindungsmittel 407 nicht mit korrespondierenden elektrischen Steckverbindungsmitteln verbunden sind; und/oder
(2) die in Schritt 307 erfasste weitere Koppelstatusinformation angibt, dass der Kopplungssensor 105d erfasst hat, dass der Sattelauflieger 2 nicht mit einem Zugfahrzeug gekoppelt ist; und
(3) die in Schritt 307 erfasste weitere Ladetürstatusinformation angibt, dass der Ladetürsensor 105a erfasst hat, dass die Flügeltür geöffnet ist.

Wenn in Schritt 308 bestimmt wird, dass die Weiterfahrvermeidurigsbetriebsfunktion deaktiviert werden soll, wird die Weiterfahrvermeidungsbetriebsfunktion in Schritt 310 deaktiviert. Andernfalls springt das Flussdiagramm in Schritt 309 zu Schritt 307.

Nach dem Deaktivieren der Weiterfahrvermeidungsbetriebsfunktion in Schritt 310, endet das Flussdiagramm beispielsweise oder springt zu Schritt 301 und beginnt von vorne.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren umfassend:
- Erfassen (301) einer Versorgungsverbindungsstatusinformation, die charakteristisch dafür ist, ob ein Nutzfahrzeuganhänger (2) mit einer externen elektrischen Energieversorgung verbunden ist;
- Bestimmen (304) zumindest basierend auf der Versorgungsverbindungsstatusinformation, ob eine Weiterfahrvermeidungsbetriebsfunktion aktiviert werden soll;
- wenn bestimmt wird, dass die Weiterfahrvermeidungsbetriebsfunktion aktiviert werden soll, Aktivieren (306) der Weiterfahrvermeidungsbetriebsfunktion.

2. Verfahren nach Anspruch 1, ferner umfassend:
- Erfassen (302) einer Koppelstatusinformation, die charakteristisch dafür ist, ob der Nutzfahrzeuganhänger mit einem Zugfahrzeug gekoppelt ist, wobei das Bestimmen, ob die Weiterfahrvermeidungsbetriebsfunktion aktiviert werden soll, ferner zumindest auf der Koppelstatusinformation basiert.

3. Verfahren nach einem der Ansprüche 1 und 2, ferner umfassend:
- Erfassen (303) einer Beladungs- und/oder Entladungsstatusinformation, die charakteristisch dafür ist, ob kein Beladungsvorgang zur Beladung eines Laderaums des Nutzfahrzeuganhängers und/oder kein Entladungsvorgang zur Entladung des Laderaums des Nutzfahrzeuganhängers stattfindet, wobei das Bestimmen, ob die Weiterfahrvermeidungsbetriebsfunktion aktiviert werden soll, ferner zumindest auf der Beladungsstatusinformation basiert.

4. Verfahren nach Anspruch 3, wobei die Beladungs- und/oder Entladungsstatusinformation eine oder mehrere der folgenden Informationen umfasst:
- Ladetürstatusinformation, die charakteristisch dafür ist, ob eine Ladetür des Nutzfahrzeuganhängers (2) geöffnet und/oder geschlossen ist;
- Laderaumbewegungsinformation, die charakteristisch für Bewegung im Laderaum (201) des Nutzfahrzeuganhängers (2) ist;
- Beladungsgewichtsinformation, die charakteristisch für ein Gewicht der Beladung des Nutzfahrzeuganhängers (2) und/oder eine Veränderung des Gewichts der Beladung des Nutzfahrzeuganhängers (2) ist;.

5. Verfahren nach einem der Ansprüche 1 bis 4, ferner umfassend:
- Erfassen einer Benutzerwunschinformation, die charakteristisch dafür ist, ob ein Benutzer ein Aktivieren der Weiterfahrvermeidungsbetriebsfunktion wünscht, wobei das Bestimmen, ob die Weiterfahrvermeidungsbetriebsfunktion aktiviert werden soll, ferner zumindest auf der Benutzerwunschinformation basiert.

6. Verfahren nach Anspruch 5, wobei die Benutzerwunschinformation in Form einer Benutzereingabe erfasst wird.

7. Verfahren nach einem der Ansprüche 1 bis 6, wobei die Weiterfahrvermeidungsbetriebsfunktion umfasst:
- eine Bremsfunktion; und/oder
- eine Warnfunktion.

8. Verfahren nach Anspruch 8, wobei die Bremsfunktion ein Blockieren von Rädern des Nutzfahrzeuganhängers (2) bewirkt, solange die Weiterfahrvermeidungsbetriebsfunktion aktiviert ist.

9. Verfahren nach einem der Ansprüche 7 und 8, wobei, wenn der Nutzfahrzeuganhänger (2) gezogen und/oder bewegt wird, während die Weiterfahrvermeidungsbetriebsfunktion aktiviert ist:
- die Bremsfunktion zumindest ein Abbremsen von Rädern des Nutzfahrzeuganhängers (2) bewirkt; und/oder
- die Warnfunktion ein Warnsignal aktiviert.

10. Verfahren nach einem der Ansprüche 1 bis 9, ferner umfassend:
- Bestimmen (308), ob die Weiterfahrvermeidungsbetriebsfunktion deaktiviert werden soll;
- wenn bestimmt wird, dass die Weiterfahrvermeidungsbetriebsfunktion deaktiviert werden soll, Deaktivieren (310) der Weiterfahrvermeidungsbetriebsfunktion.

11. Verfahren nach einem der Ansprüche 1 bis 10, wobei der Nutzfahrzeuganhänger (2) einen Steckverbinder (207) zur Herstellung einer Verbindung mit der externen elektrischen Energieversorgung umfasst.

12. Verfahren nach einem der Ansprüche 1 bis 11, wobei das Verfahren durch eine Vorrichtung (1), insbesondere einen Nutzfahrzeuganhänger (2) und/oder eine Vorrichtung (1) eines Nutzfahrzeuganhängers (2), ausgeführt wird.

13. Computerprogramm umfassend Programmanweisungen, die dazu ausgebildet sind, bei Ausführung durch mindestens einen Prozessor (100) einer Vorrichtung (1), die Vorrichtung (1) zu veranlassen, das Verfahren nach einem der Ansprüche 1 bis 12 auszuführen.

14. Vorrichtung (1) umfassend Mittel (100 -105) eingerichtet zur Ausführung des Verfahrens nach einem der Ansprüche 1 bis 12.

15. Vorrichtung nach Anspruch 14, wobei die Vorrichtung (1) ein Nutzfahrzeuganhänger (2) oder ein Teil des Nutzfahrzeuganhängers (2) ist.
